# EUROPEAN PATENT SPECIFICATION

(11) **EP 2 819 014 B1**
(45) Date of publication and mention of the grant of the patent: **27.02.2019**
(21) Application number: 14180998.8
(22) Date of filing: 07.11.2006
(51) Int. Cl.: G06F 9/54, H04W 4/00

(54) **Near field communication host controller interface**
Steuerungsschnittstelle für Nahfeldkommunikation-Host
Interface de contrôleur hôte de communication de champ proche

(30) Priority: 07.11.2005 US 733796 P; 06.01.2006 US 756562 P; 01.02.2006 US 763923 P; 10.02.2006 US 771872 P; 31.03.2006 US 787633 P; 28.04.2006 US 795642 P
(43) Date of publication of application: 31.12.2014
(62) Divisional of application: 06812483.3
(73) Proprietor: LG Electronics Inc., Yeongdeungpo-gu SEOUL 07336 (KR)
(72) Inventor: Ryoo, Seung Hyup, 137-724 Seoul (KR); Min, Sang Cheol, 137-724 Seoul (KR); Lee, Byoung Wook, 137-724 Seoul (KR); Kim, Jin Tae, 137-724 Seoul (KR)
(74) Representative: Ter Meer Steinmeister & Partner

(56) References cited:
- Cheung, William R. et al: "Direct Data Transfer Over the Host Controller Interface of the Bluez Bluetooth® Protocol Stack in Bayanihan Linux V2.0", Philippine Engineering Journal, Vol 23, No 2 (2002) Philippine Engineering Journal, vol. 23, no. 2 2002, pages 1-10, XP002732493, ISSN: 0117-5564 Retrieved from the Internet: URL:http://www.journals.upd.edu.ph/index.p hp/pej/article/view/2375 [retrieved on 2014-11-13]
- KO SUNG-YUAN ED - TIEN D ET AL: "The embedded bluetooth CCD camera", TENCON 2001. PROCEEDINGS OF IEEE REGION 10 INTERNATIONAL CONFERENCE ON ELCTRICAL AND ELECTRONIC TECHNOLOGY. SINGAPORE, AUG. 19 - 22, 2001; [IEEE REGION 10 ANNUAL CONFERENCE], NEW YORK , NY : IEEE, US, vol. 1, 19 August 2001 (2001-08-19), pages 81-84, XP010556209, ISBN: 978-0-7803-7101-9
- FERRARI P ET AL: "A bluetooth-based sensor network with web interface", IMTC 2003. PROCEEDINGS OF THE 20TH. IEEE INSTRUMENTATION AND MEASUREMENT TECHNOLOGY CONFERENCE. VAIL, CO, MAY 20 - 22, 2003. VOLUME 1 AND 2; [IEEE INSTRUMENTATION AND MEASUREMENT TECHNOLOGY CONFERENCE. (IMTC)], NEW YORK, NY : IEEE, US, vol. 2, 20 May 2003 (2003-05-20), pages 892-897, XP001555043, ISBN: 978-0-7803-7705-9

## Description

### Technical Field

The present invention relates to a communication interface between a near field communication (NFC) host and an NFC device.

### Background Art

Universality and compatibility regarding a communication interface between an NFC host and an NFC device or an NFC chipset are required. An interface between a host such as an MSM chip of a mobile handset and a micro controller unit (MCU) of a mobile apparatus, and a device or a chipset connected to the host should be handled with great importance.

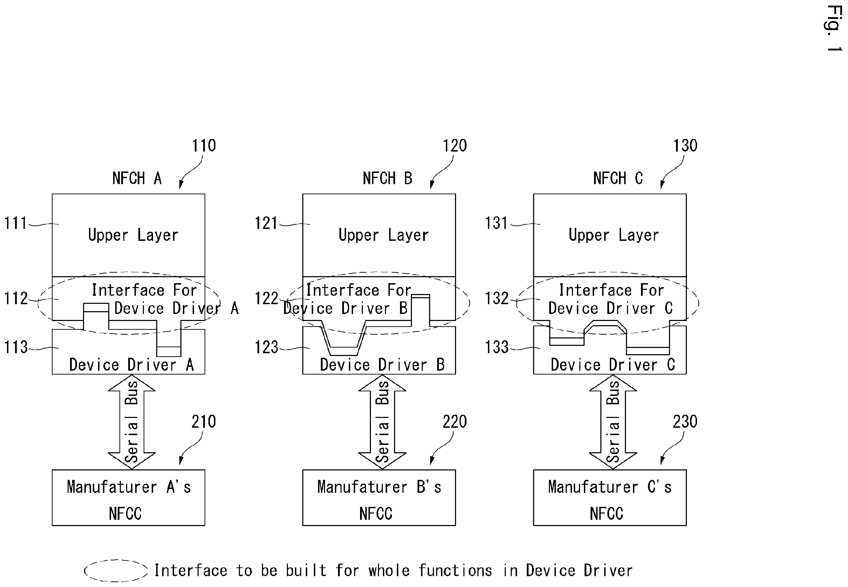

Fig. 1 illustrates interfaces between various NFC host (NFCH) and various NFC devices or NFC chipsets (NFCC). An interface between an NFCH A 110 and an NFCC A 210 is connected to an upper layer 111 on the basis of a relevant driver interface 112 suitably realized for a driver A 113 connected to the NFCC A 210 via a serial bus. An interface between other NFCH B 120 and other NFCC B 220 is connected to an upper layer 121 on the basis of a relevant driver interface 122 suitably realized for a driver B 123 connected to the NFCC B 220 via a serial bus. An interface between another NFCH C 130 and another NFCC 230 is connected to an upper layer 131 on the basis of a relevant driver interface 132 suitably realized for a driver C 133 connected to the NFCC C 230 via a serial bus.

Referring to Fig. 1, for a predetermined host, a device or a chipset connected to the predetermined host establishes a relevant driver interface using a driver suitably realized for the device or the chipset. Therefore, interfaces between the host and the chipset or the device are different from each other, and do not guarantee mutual compatibility or universality.

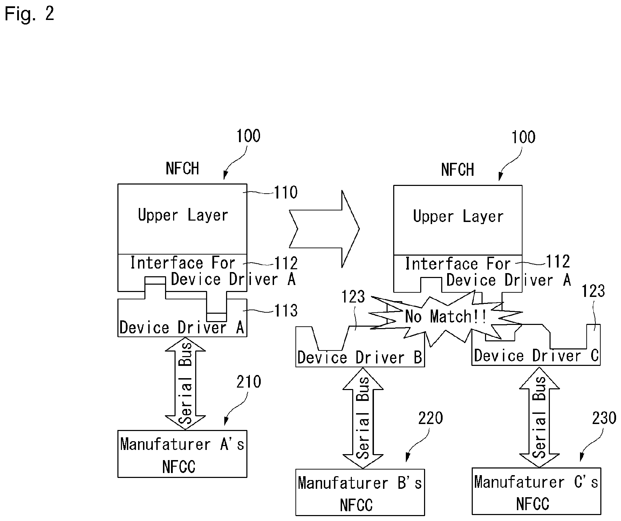

Fig. 2 illustrates disadvantages that can be generated in the case where mutual compatibility or universality is not guaranteed in interfaces between a host and a chipset or a device. When an interface suitable for the NFCC 210 is established with respect to a predetermined NFCH 100, other NFCCs 220 and 230 cannot be connected to the host 100 on the basis of different drivers 123 and 133.

Cheung, William R. et al: "Direct Data Transfer Over the Host Controller Interface of the Bluez Bluetooth TM Protocol Stack in Bayanihan Linux V2.0", Philippine Engineering Journal, Vol 23, No 2 (2002), pages 1-10, XP002732493, ISSN: 0117-5564, URL:http://www.journals.upd.edu.ph/index.php/pej/article/view/2375 [retrieved from the internet on 2014-11-13] describes direct data transfer over the host controller interface of a Bluetooth protocol stack. A HCI layer uses three packet types: commands that go from host to module, events that go from module to host, and data that travel in both directions. An application performs breaking of a large packet to smaller ones in a sending side, and combining small packets to larger ones in a receiving side.

KO SUNG-YUAN ED - TIEN D ET AL: "The embedded bluetooth CCD camera", TENCON 2001. PROCEEDINGS OF IEEE REGION 10 INTERNATIONAL CONFERENCE ON ELCTRICAL AND ELECTRONIC TECHNOLOGY. SINGAPORE, AUG. 19 - 22, 2001; [IEEE REGION 10 ANNUAL CONFERENCE], NEW YORK , NY : IEEE, US, vol. 1, 19 August 2001, pages 81-84, XP010556209, ISBN: 978-0-7803-7101-9, describes the use of Bluetooth in a surveillance application. A host controller interface (HCI) provides a uniform command interface to the baseband and link manager and also to a hardware status registers.

FERRARI P ET AL: "A bluetooth-based sensor network with web interface", IMTC 2003. PROCEEDINGS OF THE 20TH. IEEE INSTRUMENTATION AND MEASUREMENT TECHNOLOGY CONFERENCE. VAIL, CO, MAY 20 - 22, 2003. VOLUME 1 AND 2; [IEEE INSTRUMENTATION AND MEASUREMENT TECHNOLOGY CONFERENCE. (IMTC)], NEW YORK, NY : IEEE, US, vol. 2, 20 May 2003 (2003-05-20), pages 892-897, XP001555043, ISBN: 978-0-7803-7705-9, describes a Bluetooth-based sensor network with web interface. In a proposed proprietary protocol, packets from master to slave consist of a command byte and a data byte. Packets sent from a slave to master consist of a status byte followed by a one-byte data field.

### Disclosure of Invention

### Technical Problem

When interfaces between a host and a device or a chipset connected to the host are different for each host, each device, or each chipset, mutual compatibility or universality is not guaranteed.

As described above, referring to Fig. 2, a control interface between different devices requiring different interfaces requires design and development of a new driver and a new driver interface suitable for each host and each device, and requires mounting of the driver and the driver interface within the device not only in an aspect of a host but also in an aspect of the device or the chipset.

An object of the present invention is to define an interface between a host and a device or a chipset connected to the host, and to conform to the defined interface, thereby guaranteeing universality and compatibility to a host controller interface between different devices.

Another object of the present invention is to define a data format for transmitting data between an NFCH and an NFC device or an NFC chipset, and a process of the data format, and to provide an interface between devices by conforming to the defined format and the process thereof, thereby guaranteeing universality and compatibility to a host controller interface between different devices.

### Technical Solution

Solutions of these objects are disclosed in the independent claims, respectively. Advantageous developments are presented in the dependent subclaims.

In general, there is provided a communication method between a host and a device in a communication interface between the host and the device connected to the host, the method including: transmitting a command message from the host to the device; transmitting a response message from the device to the host in response to the command message; transmitting data between the host and the device; and transmitting an event message from the device to the host when needed.

Also, there is provided a communication method between a host and a device in a communication interface between the host and the device connected to the host, the method including: transmitting a command message from the host to the device, the command message including data expressing a kind of a message, data expressing contents of a message, and additional data; transmitting an event message or transmitting a response message from the device, the response message including data expressing a kind of a message, data expressing contents of a message, and additional data; and transmitting information expressing data and a message including the data between the host and the device in response to the command or the response message when needed.

Moreover, there is provided a communication method between a near field communication host and a near field communication device in a communication interface between the host and the device connected to the host, the method including: transmitting a command message from the host to the device, the command message including one of recording data, reading data of the device, requesting the device to transmit predetermined data, and setting the device; transmitting a response message informing a performance result of a relevant command from the device to the host in response to the command message; and transmitting an event message from the device to the host when needed.

### Advantageous Effects

According to the present invention, universality and compatibility in a communication between a host MCU and an NFC device or a chipset are guaranteed.

According to the present invention, universality and compatibility of an interface regarding a command, a response, data, and an event message in a communication between an NFC host and an NFC device or a chipset are guaranteed.

According to the present invention, an NFC device or an NFC chipset can be used without a device driver, a middle ware, or an application modification in an aspect of an NFCH. Also, according to the present invention, universality and compatibility in an interface between a host and an NFC device or an NFC chipset can be achieved even though a driver suitable for each host is not realized in an aspect of the NFC device or the NFC chipset.

### Brief Description of the Drawings

Fig. 1 is a view illustrating interfaces between various NFCH and various NFC devices or NFC chipsets;
Fig. 2 is a view illustrating disadvantages that can be generated in the case where different interfaces are realized between an NFCH and NFC devices or NFC chipsets;
Fig. 3 is a view explaining a host controller interface concept according to the present invention;
Fig. 4 is a view explaining advantages in the case where a host controller interface according to the present invention is adopted;
Fig. 5 is a view illustrating an exemplary structure of an NFCH and an NFC device;
Fig. 6 is a view illustrating an example of an interface control process in a reader/ writer mode;
Fig. 7 is a view illustrating an example of an interface control process in a peer mode;
Fig. 8 is a view illustrating an exemplary method for transmitting data;
Fig. 9 is a view illustrating an example of an interface control process between an NFCH and an NFC device;
Fig. 10 is a view illustrating an exemplary structure of an interface between an NFCH and an NFC chipset (or an NFC device);
Fig. 11 is a view illustrating another exemplary structure of an interface between an NFCH and an NFC chipset (or an NFC device);
Fig. 12 is a view illustrating an example of a message format;
Fig. 13 is a view illustrating an example of a message descriptor field (MDESC) in a message format;
Fig. 14 is a view illustrating an example of a node address field (NAD) in a message format;
Fig. 15 is a view illustrating an example of a command message format in a message format;
Fig. 16 is a view illustrating an example of a response message format in a message format;
Fig. 17 is a view illustrating an example of an event message format in a message format;
Fig. 18 is a view illustrating an example of a data message format in a message format;
Fig. 19 is a view illustrating an example of a kind of a command message;
Fig. 20 is a view illustrating an example of a kind of a response message;
Fig. 21 is a view illustrating an example of kinds of a command message and a response message;
Fig. 22 is a view illustrating an example of a kind of an event message;
Fig. 23 is a view illustrating an example of device management functionality in command and response messages;
Fig. 24 is a view illustrating an example of NFC data communication functionality in command and response messages;
Fig. 25 is a view illustrating an example of secure element support functionality in command and response messages;
Fig. 26 is a view illustrating an example of an error code message in command and response messages; and
Fig. 27 is a view illustrating an example of an event message.

### Best Mode for Carrying Out the Invention

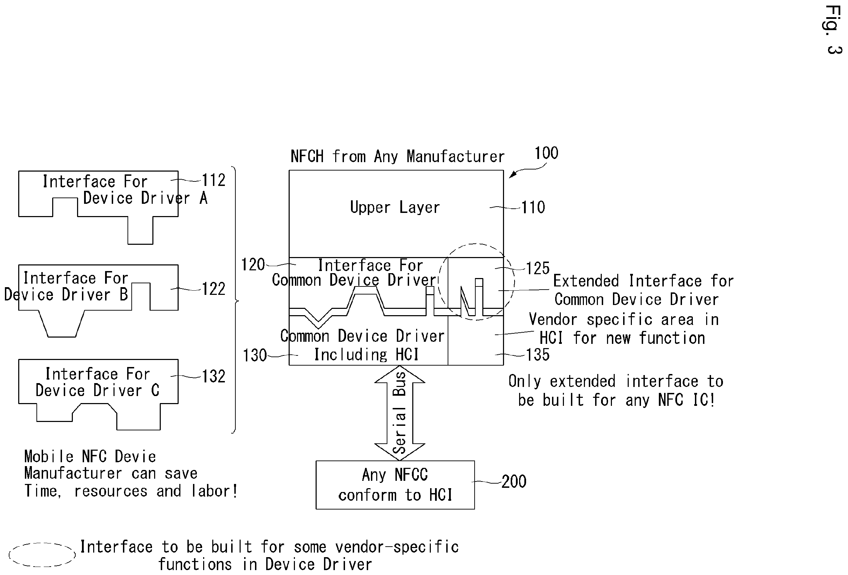

Fig. 3 is a view explaining a host controller interface (HCI) concept according to the present invention. An NFCH, and an NFC chipset or an NFC device conform to a format and a process according to the present invention. According to the present invention, an arbitrary NFCH 100 has a common interface driver 120 with respect to interfaces 112, 122, and 132 corresponding to various kinds of drivers, and an arbitrary NFC chipset (an NFC device is included hereinafter) 200 is connected to a common device driver 130 including the HCI via a communication line, e.g., a serial bus as one example. Also, an extended interface 125 for the common device driver is further provided in order to give extensibility. Accordingly, a driver area 135 that can be freely defined and used by a vendor is further provided.

Referring to Fig. 3, it is possible to guarantee mutual compatibility and universality in a series of control operations including data transmission between different devices by having devices conform to a format and a process determined in association with an interface between an NFCH and an NFC chipset.

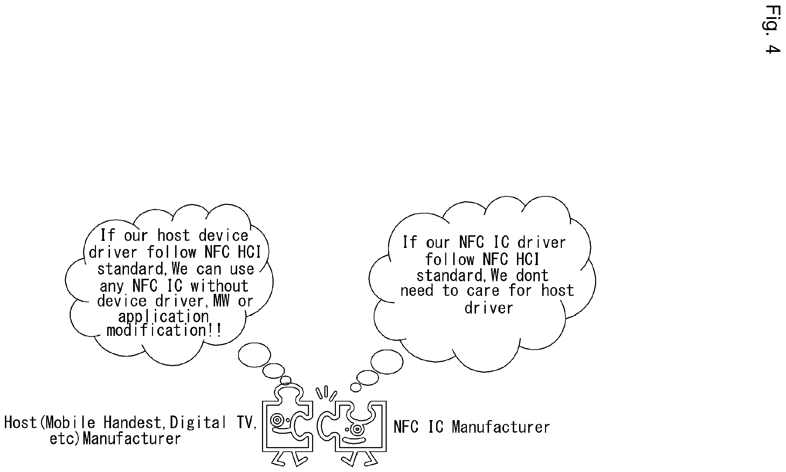

Fig. 4 is a view explaining advantages in the case where a host controller interface according to the present invention is adopted. When a host such as a mobile handset and a digital television receiver conforms to an NFC HCI of the present invention, the host can be freely used with compatibility and universality guaranteed without a device driver or a middle ware (MW) with respect to any NFC chipset (NFC IC). Also, when the NFC IC conforms to the NFC HCI, the NFC IC can be freely used with compatibility and universality guaranteed without a difficulty associated with a host driver with respect to any NFC host.

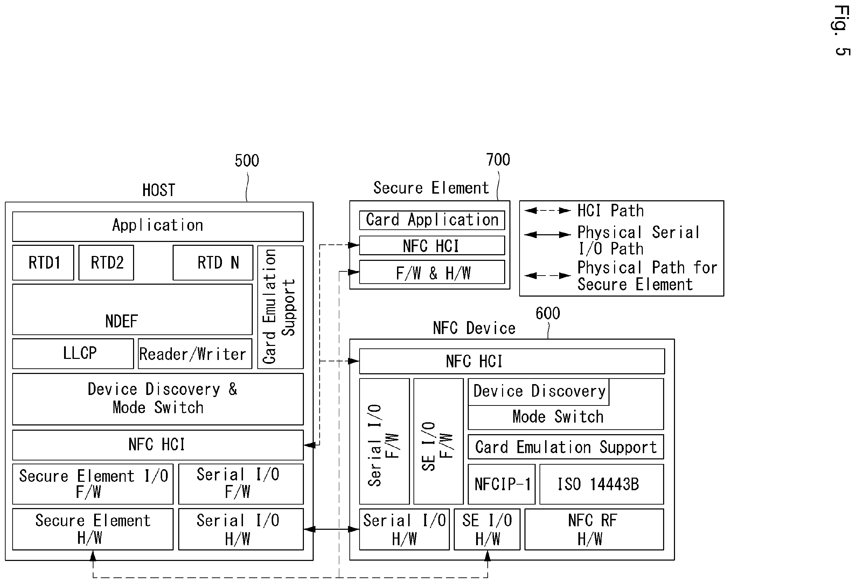

Fig. 5 is a view illustrating an exemplary structure of an NFCH and an NFC device that can be used in an embodiment of the present invention. Fig. 5 illustrates inner structures of a host 500, an NFC device 600, and a secure element 700. The host (i.e., NFCH) 500 includes a logical link control protocol (LLCP), a reader/writer, an NFC data exchange format (NDEF), a card emulation module (e.g., NFCIP-I, ISO 14443B), and a record type definition (RTD) that are located above a device discovery and a mode switch stack. Also, the host 500 further includes respective secure element input/ output(I/O) parts (e.g., a secure element I/O firmware (FfW) and a secure element I/O hardware (WW)), serial input/output(I/O) parts (e.g., a serial VO firmwawr(F/W) and a serial I/O hardware (WW)). And the host 500 is connected to the NFC device 600 and the secure element 700 on the basis of an NFC HCI.

The NFC device 600 is connected to the host 500 and the secure element 700 on the basis of the NFC HCI, and connected to the host 500 and the secure element 700 on the basis of a serial I/O part (e.g., a serial I/O F/W and SE I/O F/W and H/W). Also, the NFC device 600 includes a device discovery and a mode switch stack, a card emulation module, and an NFC RF H/W.

The secure element 700 includes a card application, an NFC HCI, a secure element I/O part (e.g., a secure element I/O F/W and H/W) and is connected to the host 500 and the NFC device 600.

Here, the serial I/O F/W controls a serial port such as a universal asynchronous receiver and transmitter (UART) or a universal serial bus (USB). Fig. 5 illustrates an HCI path, a physical serial I/O path, and a physical path for a secure element using dotted lines and a solid line.

A structure of host-device-secure element illustrated in Fig. 5 is a mere example, and an NFC system of the present invention is not limited to an example illustrated herein. Respective inner structures of the above-described host, device, and card-based secure system, physical structures thereof, and a communication method including modules mounted thereon can be more freely designed and modified, and can be easily realized by a person of ordinary skill in the art.

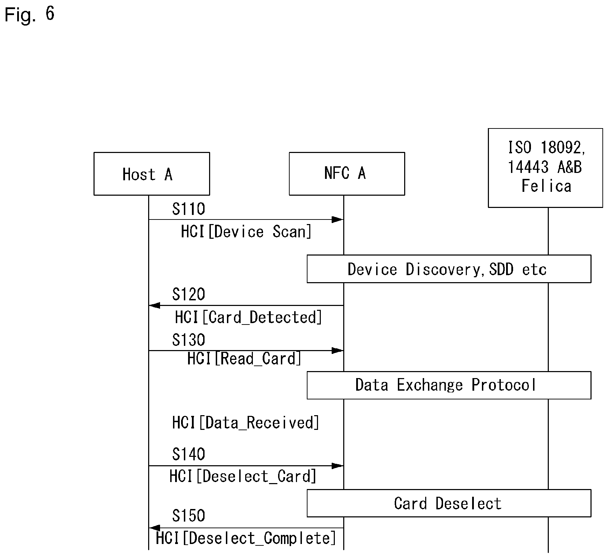

Fig. 6 is a view illustrating an example of an interface control process in a reader/ writer mode according to an example. Fig. 6 illustrates a process, i.e., a host controller interface (HCI) that can be performed between a host A and an NFC device. The host performs a device scan process on the device (Sl 10). Accordingly, device discovery, single device detection are performed. A card detection response (Card_Detected) therefor is delivered to the host (S 120). The host performs a card read process (Read_Card) in response to the card detection (S130). At this point, a data exchange protocol can be applied. Data is received (Data_Received) from the NFC device to the NFCH (S 140). When data reception is completed, the host performs a card deselect process (Deselect_Card) (S 150). When the card deselect process is completed, the NFC device performs a relevant response (Deselect_Card) on the NFC host (S 160).

Referring to Fig. 6, a command and a response operate in a pair in the HCI according to the present invention, which will be described later in detail.

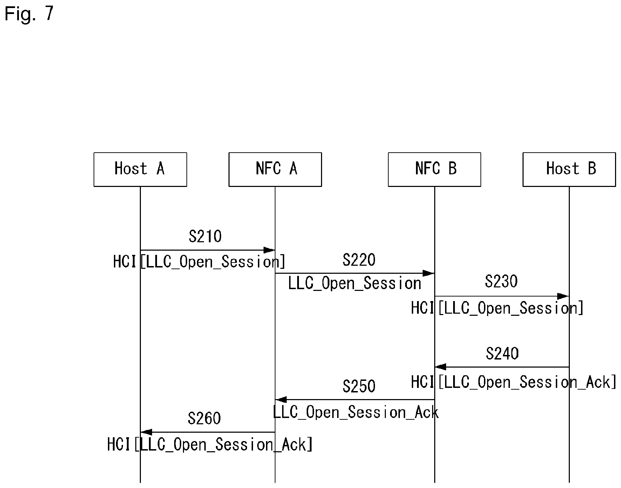

Fig. 7 is a view illustrating an example of an interface control process in a peer mode according to an example. That is, Fig. 7 illustrates how the NFC HCI operates in a peer-to-peer communication. A host A and a host B communicate with each other on the basis of an NFC A and an NFC B, respectively. The host A performs a session open (LLC_Open_Session) process on the host B on the basis of the NFC A and NFC B (S210-S230). The host B performs a session open ac-knowledge (LLC_Open_Session_Ack) process on the host A on the basis of the NFC B and NFC A. That is, the peer-to-peer communication can be freely performed with compatibility and universality guaranteed by conforming to the NFC HCI of the present invention.

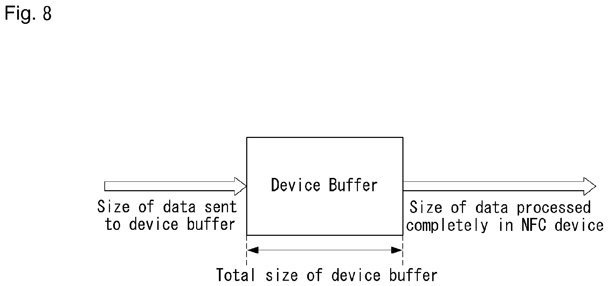

Fig. 8 is a view illustrating an exemplary method for transmitting data according to an example. Here, the method for transmitting data without a data loss by preventing overflow when transmitting data is illustrated. That is, a data transmission party performs data segmentation and transmits the segmented data and related data to a data reception party with consideration of a size of a device buffer. The data reception party receives the transmitted and segmented data to reconstruct the segmented data, so that the original data can be received without a loss. An example of the related data when the segmented data is transmitted includes data size-related data. Data related to a buffer size of a device in the reception party is obtained during a transmission operation, and data is transmitted using the obtained buffer size-related data.

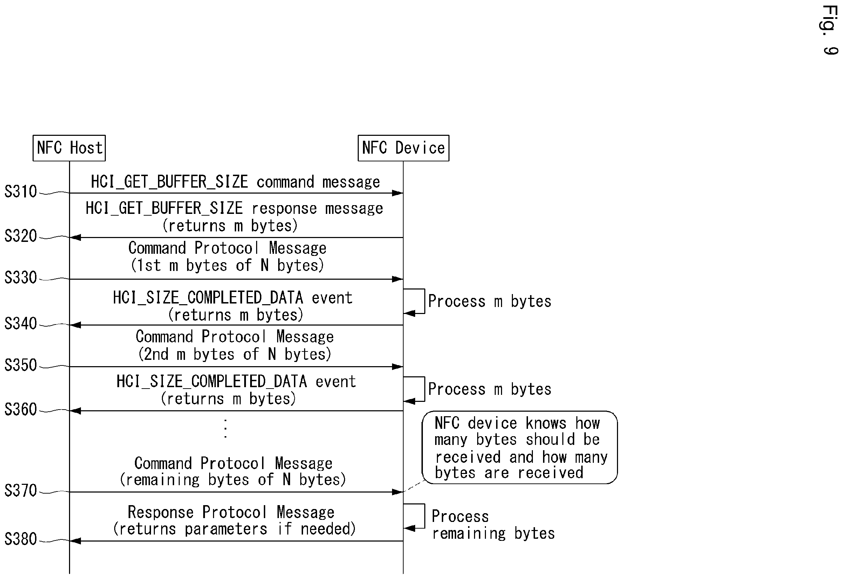

Fig. 9 is a view illustrating an example of an interface control process between an NFCH and an NFC device according to an example. That is, Fig. 9 illustrates a series of processes of segmenting data and transmitting the segmented data with consideration of a buffer size of a device, thereby preventing a data loss.

A command (HCI_GET_BUFFER_SIZE command message) requesting a buffer size of a device is delivered from an NFCH to an HFC device (S310).

The NFC device delivers buffer size data (HCI_GET_BUFFER_SIZE response message) expressed by m bytes to the NFCH in response to the command requesting the buffer size of the device (S320). The NFCH transmits first data that has been obtained by segmenting a size of data to be transmitted with consideration of the buffer size (m bytes) on the basis of the buffer size data of the device (Command Protocol Message)(S330). The NFC device transmits a response (HCI_SIZE_COMPLETE_DATA event) that the data has been completely received (S340). This response can be performed by returning m bytes. The next operations S350, S360, and S370 describe a process of transmitting the rest data and receiving a response thereof in the same way. When transmission of all data to be transmitted from the NFCH to the NFC device is completed in this manner, the NFC device transmits a message informing that data transmission has been completed to the NFCH, and ends the process (Response Protocol Message). This response can be performed by returning a necessary parameter.

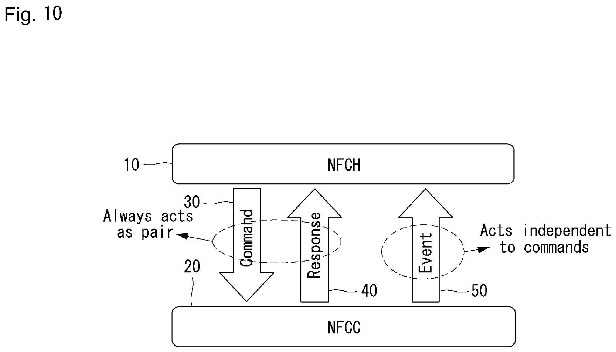

Fig. 10 is a view illustrating an exemplary structure of an interface between an NFCH and an NFC chipset (or an NFC device) according to an example. Communication is performed between the NFCH 10 and the NFC device 20 on the basis of a command 30, a response 40, and an event 50. The command 30 is delivered from the NFCH 10 to the NFC device 20. The response 40 is delivered from the NFC device 20 to the NFCH 10. The event 50 is delivered from the NFC device 20 to the NFCH 10, and independent with respect to the command and the response. The command 30 and the response 40 act in a pair. An event process is performed through asynchronous messaging.

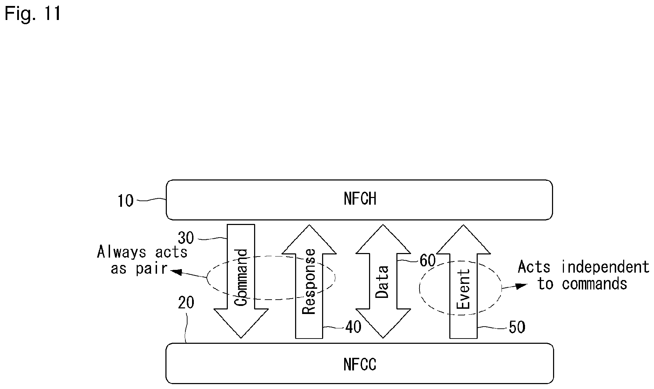

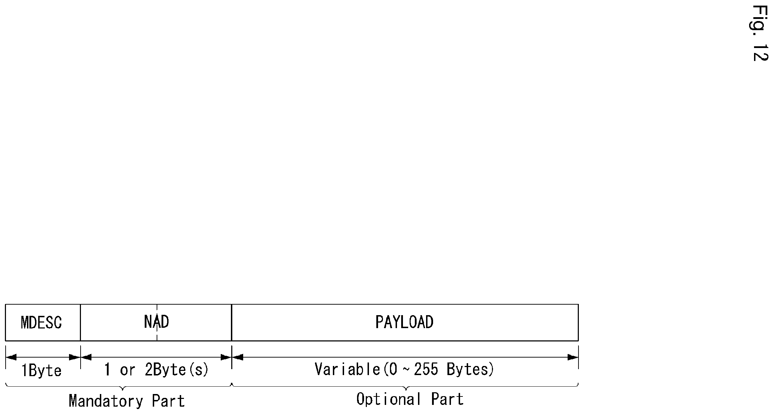

Fig. 11 is a view illustrating another exemplary structure of an interface between an NFCH and an NFC chipset (or an NFC device) according to an example. Communication is performed between the NFCH 10 and the NFC device 20 on the basis of a command 30, a response 40, and an event 50. In addition, a data transmission process 60 is provided. The command 30 is delivered from the NFCH 10 to the NFC device 20. The response 40 is delivered from the NFC device 20 to the NFCH 10. The event 50 is delivered from the NFC device 20 to the NFCH 10, and independent with respect to the command and the response. The command 30 and the response 40 act in a pair. An event process is performed through asynchronous messaging. The data 60 is delivered from the NFCH 10 to the NFC device 20, or from the NFC device 20 to the NFCH 10. That is, the data transmission process is based on bi-directional communication. The interface process and the structure thereof illustrated in Figs. 11 and 12 is a mere example, and the HCI process of the present invention is not limited thereto.

Fig. 12 is a view illustrating an example of a message format according to an example. This is just one example, and a message format according to the present invention is not limited thereto. Referring to Fig. 12, a general message format according to an example includes a message descriptor field (MDESC), a node address field (NAD), and a payload field. The MDESC field and the NAD field can be considered as a mandatory part, and the payload field can be considered as an optional part. In the message format of Fig. 12, the MDESC has 1 byte, the NAD has 1 byte or 2 bytes, and the payload has 0-255 bytes, but these values are mere examples.

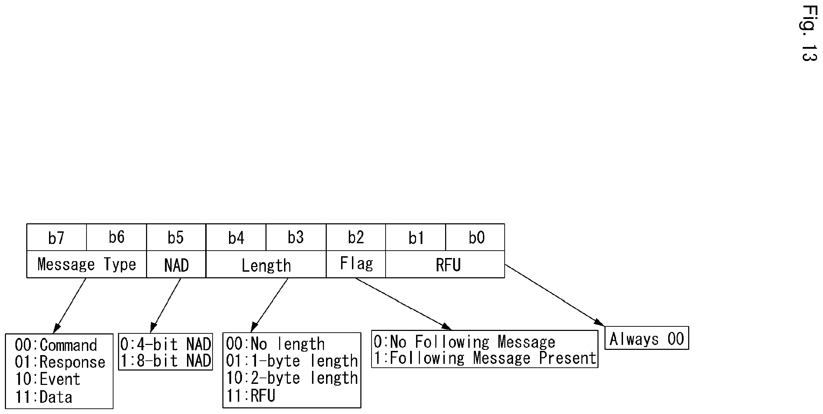

Fig. 13 is a view illustrating an example of a message descriptor field (MDESC) in a message format according to an example. Here, Fig. 13 illustrates examples in which what meaning respective values recorded on the MDESC field have in the case where the MDESC is expressed by 1 byte. A message type, an NAD, length data, a flag, and a reserved for future use (RFU) are recorded on the MDESC field. The message type can be expressed by 2 bits, and can express a command, a response, an event, and data depending on the expressed value. The NAD can express whether it is a 4-bit NAD or a 8-bit NAD depending on a value thereof. The length data can express a case where length data is absent (no length), a case where length data is 1 byte long, a case where length data is 2 byte long, and a case where length data is an RFU. The flag can express a case where following message is present and a case where no following message is present. The RFU can be always expressed using a predetermined value.

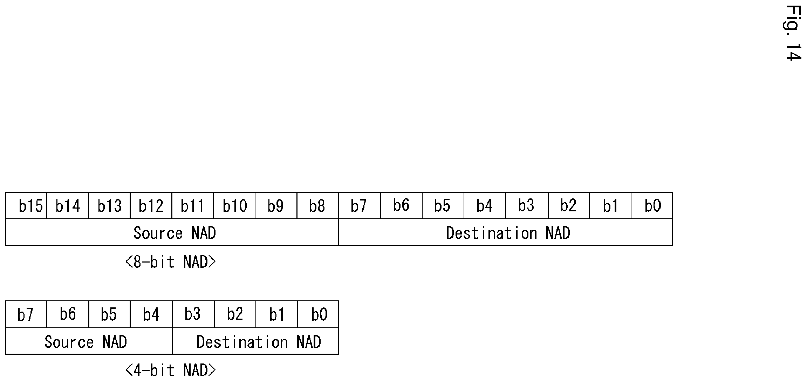

Fig. 14 is a view illustrating an example of a node address field (NAD) in a message format according to an example. The NAD has considered a case where it is a 8-bit NAD and a case where it is a 4-bit NAD. In the case where it is a 8-bit NAD, the NAD can be expressed by 2 bytes in which a source NAD is expressed on an upper 1 byte and a destination NAD is expressed on a lower 1 byte. In the case where it is a 4-bit NAD, the NAD can be expressed by 1 byte in which a source NAD is expressed on upper 4 bits and a destination NAD is expressed on lower 4 bits.

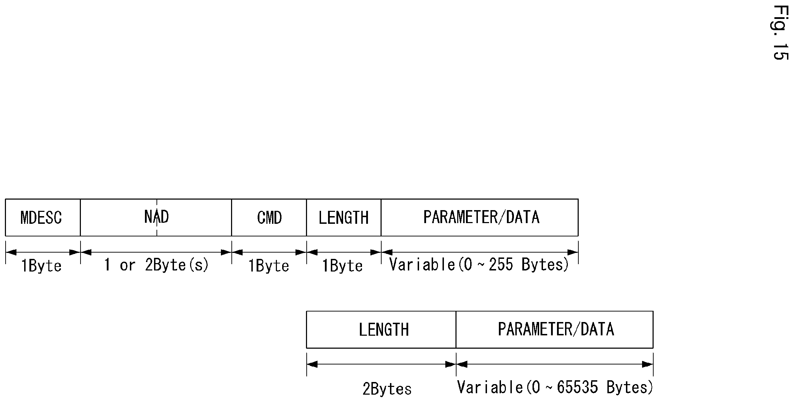

Fig. 15 is a view illustrating an example of a command message format in a message format according to an example. The command message format includes an MDESC of 1 byte, an NAD of 1 byte or 2 bytes, a command (CMD) of 1 byte, a length of 1 byte, and a parameter/data of 0-255 bytes. A command code is recorded on a CMD field. In the case where there exists a parameter or data, a length field expresses a length of the parameter or the data. The length can be expressed by 2 bytes. In this case, a length of a parameter or data field can be 0-65535 bytes. A code expressing a command expressed by a message is recorded on the CMD field. Examples of kinds of commands and code values that can be used will be descried later in detail.

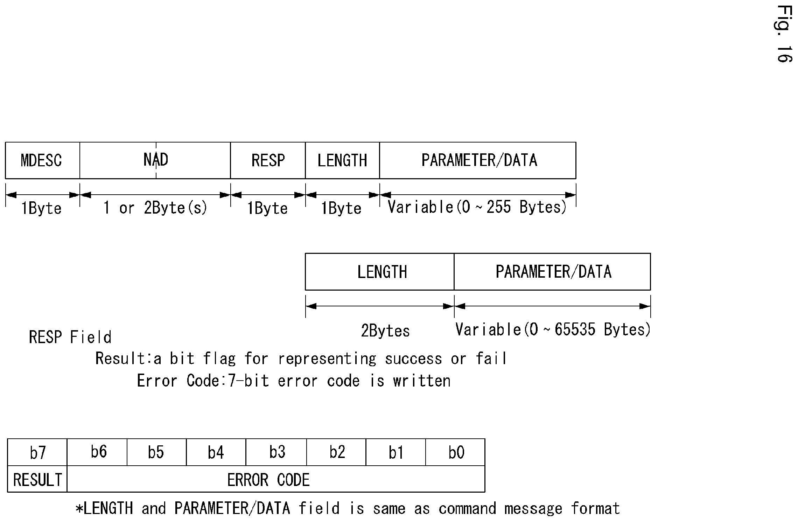

Fig. 16 is a view illustrating an example of a response message format in a message format according to an example. The response message format includes an MDESC of 1 byte, an NAD of 1 byte or 2 bytes, a response (RESP) of 1 byte, a length of 1 byte, and a parameter/data of 0-255 bytes. A response code is recorded on a RESP field. In the case where there exists a parameter or data, a length field expresses a length of the parameter or the data. The length can be expressed by 2 bytes. In this case, a length of a parameter or data field can be 0-65535 bytes. A code expressing a response expressed by a message is recorded on the RESP field. A 1-bit flag expressing a success or a failure of a response is expressed as a result. A 7-bit error code expressing a kind of an error is recorded. Kinds of a response, code values that can be used, kinds of errors, and values that can be used will be described later in detail.

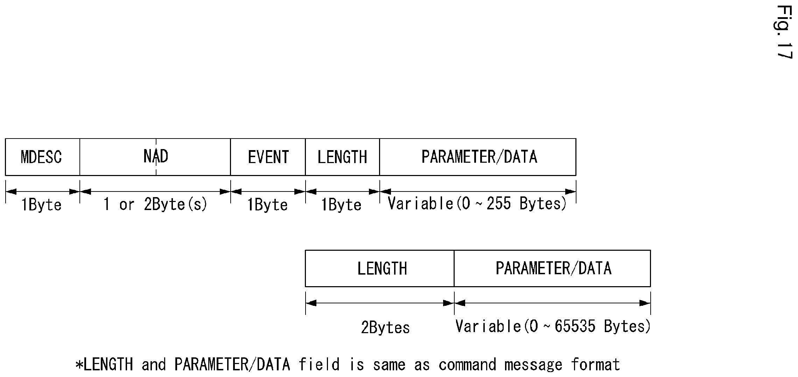

Fig. 17 is a view illustrating an example of an event message format in a message format according to an example. The event message format includes an MDESC of 1 byte, an NAD of 1 byte or 2 bytes, an event of 1 byte, a length of 1 byte, and a parameter/data of 0-255 bytes. An event code is recorded on an event field. In the case where there exists a parameter or data, a length field expresses a length of the parameter or the data. The length can be expressed by 2 bytes. In this case, a length of a parameter or data field can be 0-65535 bytes. A code expressing an event expressed by a message is recorded on the event field. Examples of kinds of events and code values that can be used will be described later in detail.

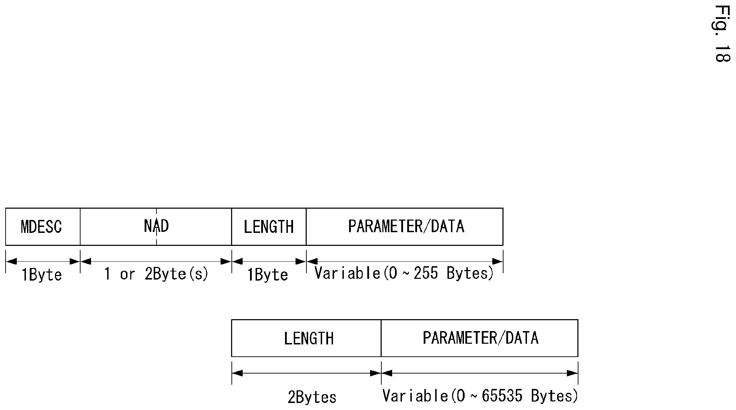

Fig. 18 is a view illustrating an example of a data message format in a message format according to an example. The data message format includes an MDESC of 1 byte, an NAD of 1 byte or 2 bytes, a length of 1 byte, and a parameter/data of 0-255 bytes. In the case where there exists a parameter or data, a length field expresses a length of the parameter or the data. The length can be expressed by 2 bytes. In this case, a length of a parameter or data field can be 0-65535 bytes.

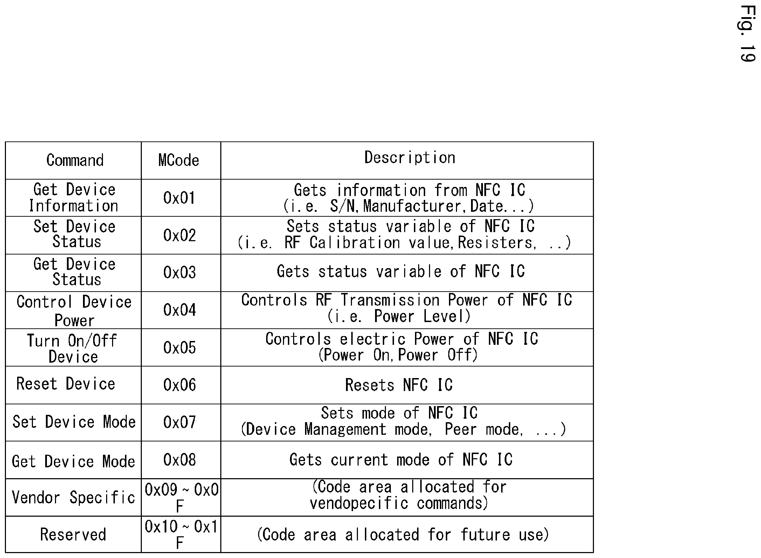

Fig. 19 is a view illustrating an example of a kind of a command message according to an example. Kinds of a command message and code values expressing relevant commands used therein are mere examples and the present invention is not limited thereto. A Get Device Information command is a command reading data of an NFC device. The Get Device Information command reads a serial number of an NFC device, manufacturer-related data, and manufacturing date. Here, an example of a code value of the Get Device Information command is expressed by 0x01. A Set Device Status command is a command setting a status variable of an NFC device, and sets a radio frequency (RF)-related information (e.g., RF calibration) and registers data. Here, an example of a code value of the Set Device Status command is expressed by 0x02. A Get Device Status command is a command reading a status variable of an NFC device. A code value of the Get Device Status command is expressed by 0x03. A Control Device Power command is a command controlling RF transmission power of an NFC device. A code value of the Control Device Power command is expressed by 0x04. A Turn On/Off Device command is a command turning on or off electrical power of an NFC device. A code valued of the Turn On/Off Device command is expressed by 0x05.

A Reset Device command is a command initializing an NFC device. A code value of the Reset Device command is expressed by 0x06. A Set Device Mode command is a command setting an NFC device mode. For example, the Set Device Mode command sets a device management mode and a peer mode. A code value of the Set Device Mode command is expressed by 0x07. A Get Device Mode command is a command reading a current mode of an NFC device. A code value of the Get Device Mode command is expressed by 0x08.

Meanwhile, a command code area (vendor specific: 0x09-0x0F) that can be defined by a vendor is assigned from a command message, and OxIO-OxIF is assigned as a reserved code area.

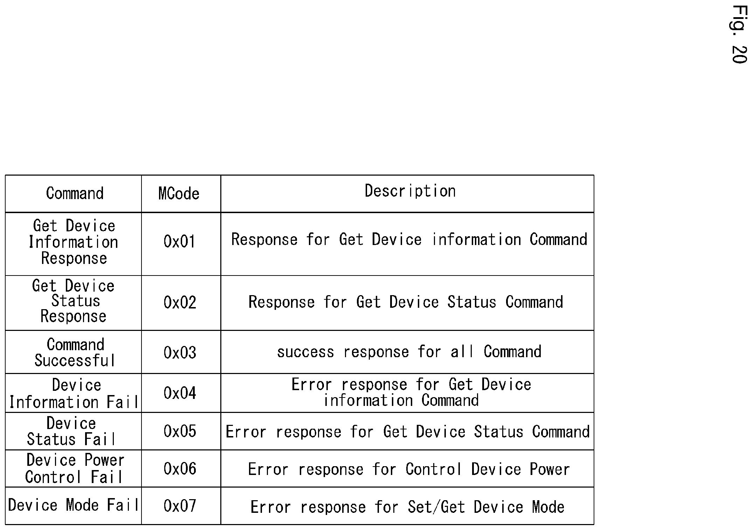

Fig. 20 is a view illustrating an example of a kind of a response message according to an example. Kinds of a response message and code values expressing responses used therein are mere examples and the present invention is not limited thereto. A Get Device Information Response is a response to a Get Device Information Command, and a code value of the Get Device Information Response is expressed by 0x01. A Get Device Status Response is a response to a Get Device Status Command, and a code value of the Get Device Status Response is expressed by 0x02. When a command is performed successfully, a response is made by expressing a response informing that the command is successful using a relevant code value of 0x03.

Besides this, a variety of error responses are performed. When an error for the Get Device Information Command is generated, a response is made by expressing a response message informing device information fail using a code value of 0x04. When an error for the Get Device Status Command is generated, a response is made by expressing a response message informing device status fail using a code value of 0x05. When an error for Control Device Power is generated, a response is made by expressing a response message informing device power control fail using a code value of 0x06. When an error for Set/Get Device Mode is generated, a response is made by expressing a response message informing device mode fail using a code value of 0x07.

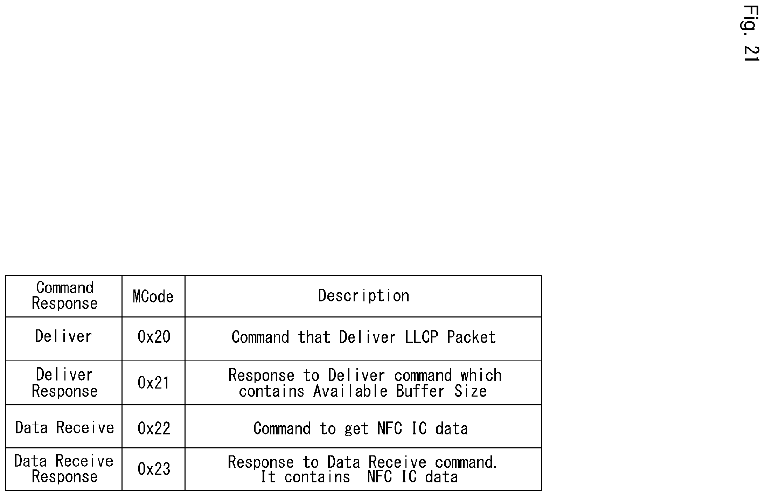

Fig. 21 is a view illustrating an example of kinds of a command message and a response message according to an example. Kinds of command messages and response messages and code values expressing commands and responses used therein are mere examples and the present invention is not limited thereto. Here, Deliver describes it is a command that delivers an LLCP packet and uses a code value of 0x02. A Deliver Response is a response that delivers a command having effective buffer size data and uses a code value of 0x21. A Data Receive is a command that reads data from an NFC device and uses a code value of 0x22. A Data Receive Response is a response to a data receiving command, includes NFC device data, and can use a code value of 0x23.

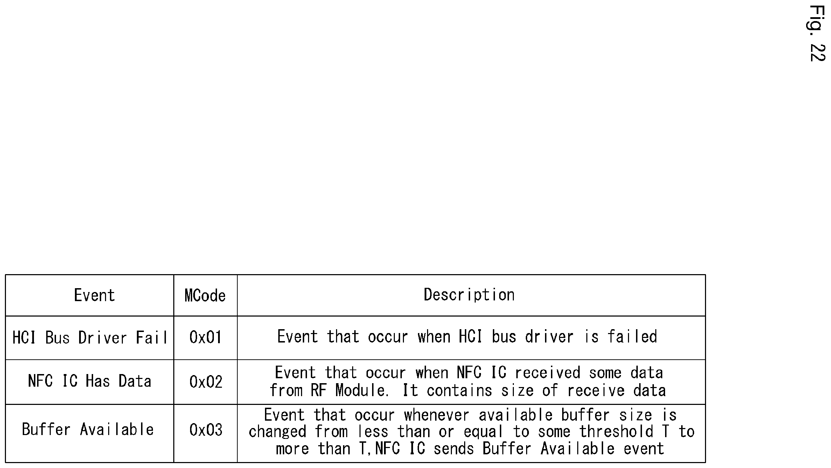

Fig. 22 is a view illustrating an example of a kind of an event message according to an example. An event message is independent with respect to a command and a response. When data reception or a critical error is generated at an NFC device, an event message is used to inform the generated event to an NFCH. Here, some representative cases are descried. Three event messages of HCI Bus Driver Fail, NFC IC Has Data, and Buffer Available are described. Each message uses a corresponding code of 0x01, 0x02, and 0x03 expressing a corresponding event. In the case where a problem is generated to an HCI bus driver, an NFC device receives data from an RF module, or a buffer size changes, these messages can be used for providing corresponding data. Detailed description of each case is made in Fig. 22.

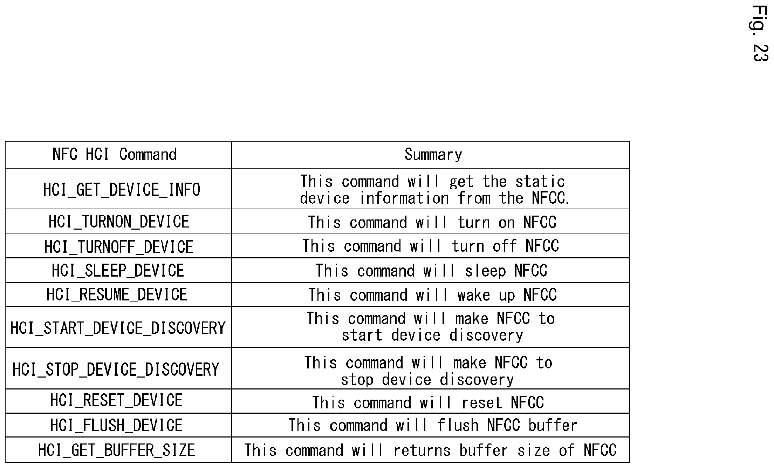

Fig. 23 is a view illustrating an example of device management functionality in command and response messages according to an example. This corresponds to a device management category. A command HCI_GET_DEVICE_INFO is a command reading NFC device data, and a message type is a command. A code value of the command HCI_GET_DEVICE_INFO, and a command parameter and a return parameter value as parameters are recorded.

A command HCI_TURNON_DEVICE is a command for turning on power of an NFC device, and a message type is a command. A code value of the command HCI_TURNON_DEVICE and a return parameter value expressing a success or a failure are recorded.

A command HCI_TURNOFF_DEVICE is a command for turning off power of an NFC device, and a message type is a command. A code value of the command HCI_TURNOFF_DEVICE and a return parameter value expressing a success or a failure are recorded.

A command HCI_SLEEP_DEVICE is a command for changing an NFC device to a sleep state, and a message type is a command. A code value of the command HCI_SLEEP_DEVICE and a return parameter value expressing a success or a failure are recorded.

A command HCI_RESUME_DEVICE is a command for waking up an NFC device from a sleep state, and a message type is a command. A code value of the command HCI_RESUME_DEVICE and a return parameter value expressing a success or a failure are recorded.

A command HCI.START.DEVICE.DISCOVERY is a command for starting NFC device discovery, and a message type is a command. A code value of the command HCLSTART.DEVICE.DISCOVERY and a return parameter value expressing a success or a failure are recorded.

A command HCI_STOP_DEVICE_DISCOVERY is a command for stopping NFC device discovery, and a message type is a command. A code value of the command HCI.STOP.DEVICE.DISCOVERY and a return parameter value expressing a success or a failure are recorded.

A command HCI_RESET_DEVICE is a command for initializing an NFC device, and a message type is a command. A code value of the command HCI_RESET_DEVICE and a return parameter value expressing a success or a failure are recorded.

A command HCI_FLUSH_DEVICE is a command for flushing an NFC device buffer, and a message type is a command. A code value of the command HCI_FLUSH_DEVICE and a return parameter value expressing a success or a failure are recorded.

A command HCI_GET_BUFFER_SIZE is a command for reading an NFC device buffer size, and a message type is a command. A code value of the command HCI_GET_BUFFER_SIZE and a return parameter value expressing a success or a failure and a buffer size are recorded.

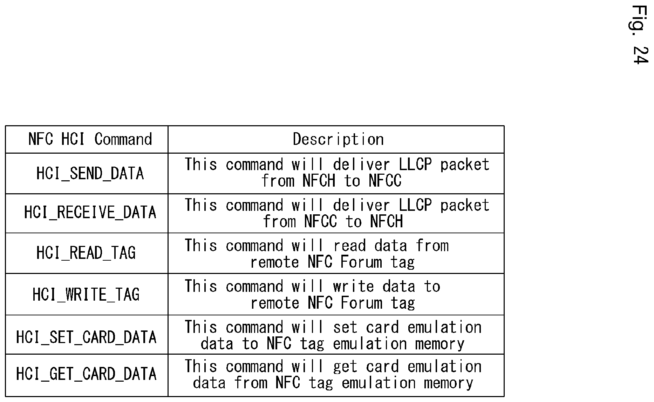

Fig. 24 is a view illustrating an example of NFC data communication functionality in command and response messages according to an example. This corresponds to an NFC data communication category.

A command HCI_SEND_DATA is a command for delivering an LLCP packet from an NFCH to an NFC device, and a message type of this command HCI_SEND_DATA is a command. A code value of the command HCI_SEND_DATA, a command parameter expressing an LLCP packet, and a return parameter value expressing a success or a failure and a buffer size are recorded.

A command HCI_RECEIVE_DATA is a command for delivering an LLCP packet from an NFC device to an NFCH, and a message type of this command HCI_RECEIVE_DATA is a command. A code value of the command HCI_RECEIVE_DATA, a command parameter expressing an LLCP packet, and a return parameter value expressing a success or a failure and a buffer size are recorded.

A command HCI_READ_TAG is a command for reading NFC data exchange format (NDEF) data from an NFC forum tag of the NFC device, and a message type of this command HCI_READ_TAG is a command. A code value of the command HCI_READ_TAG, and a return parameter value expressing a success or a failure are recorded. Also, a read_data parameter (a command parameter) is recorded. This read_data parameter is read from an NFC forum tag, and thus this data format conforms to an NDEF.

A command HCI_WRITE_TAG is a command for recording NDEF data on an NFC forum tag of the NFC device, and a message type of this command HCI_WRITE_TAG is a command. A code value of the command HCI_WRITE_TAG, and a return parameter value expressing a success or a failure are recorded. Also, a write_data parameter (a command parameter) is recorded. This write_data parameter includes NDEF data to be recorded on a tag.

A command HCI_SET_CARD_DATA is a command for recording NDEF data in a card memory of an NDEF device in order to perform card emulation, and a message type of this command HCI_SET_CARD_DATA is a command. A code value of the command HCI_SET_CARD_DATA, and a return parameter value expressing a success or a failure are recorded. Also, a card_data parameter is recorded as a command parameter. This card_data parameter expresses data to be stored in a card emulation memory.

A command HCI_GET_CARD_DATA is a command for reading data stored in a card memory of the NFC device, and a message type of this command HCI_GET_CARD_DATA is a command. A code value of the command HCI_GET_CARD_DATA, and a return parameter value expressing a success or a failure are recorded. Also, a card_data parameter is recorded.

In the above, the parameter value expressing a failure in the above-described message format can be accompanied with a corresponding error code value.

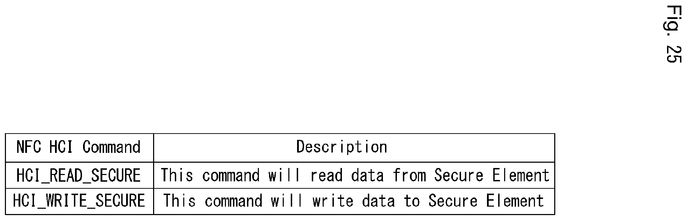

Fig. 25 is a view illustrating an example of secure element support functionality in command and response messages according to an example. That is, Fig. 25 illustrates HCI_READ_SECURE which is a command for reading data from a secure element, and HCI_WRITE_SECURE, which is a command for recording data on a secure element.

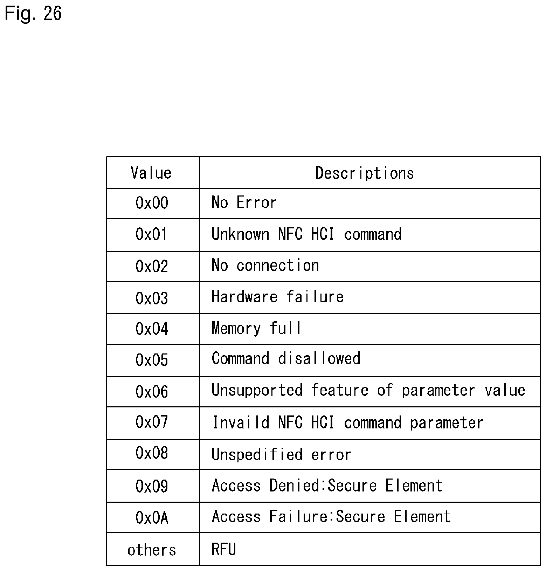

Fig. 26 is a view illustrating an example of an error code message in command and response messages according to an example. Kinds of errors and code values expressing the errors used therein are mere examples and the present invention is not limited thereto. Error code values and meanings thereof according to an example are described. 0x00 expresses no error is present, 0x01 expresses an undefined command, 0x02 expresses connection between devices is not made, and 0x03 expresses a hardware failure.

Also, 0x04 expresses a memory full state, 0x05 expresses a command disallowed, 0x06 expresses a parameter value is not supported, and 0x07 expresses an invalid command parameter.

Also, 0x08 expresses error not prescribed, 0x09 expresses an access of a secure element has been rejected, and OxOA expresses an access of a secure element has failed. The rest code value is RFU.

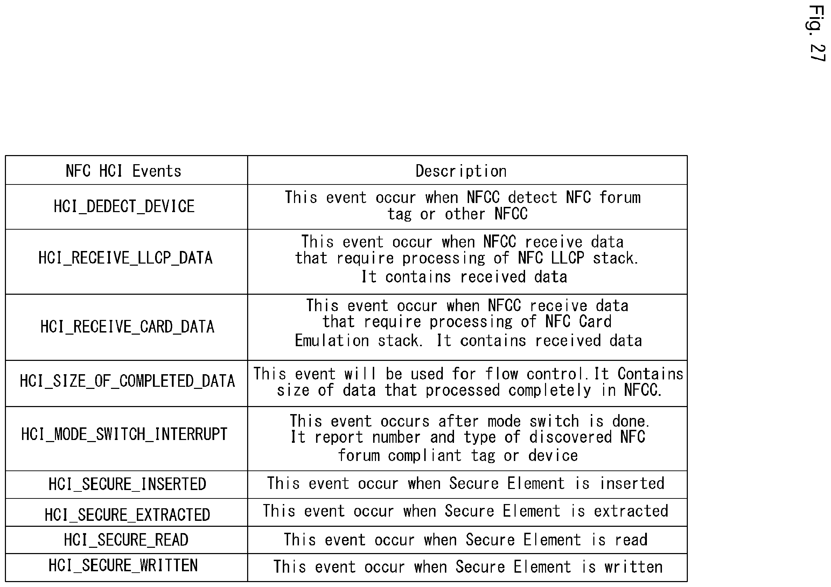

Fig. 27 is a view illustrating an example of an event message according to an example. Kinds of event messages used therein are mere examples and the present invention is not limited thereto.

HCI_DETECT_DEVICE is an event message informing a host that the number of detected devices or tags of a predetermined type when device discovery is performed, and a message type of HCI_DETECT_DEVICE is an event. A corresponding message code is recorded.

HCI_RECEIVE_DATA_EVENT is an event message for delivering data to a host when an NFC device receives the data from an air interface, and a message type of HCI_RECEIVE_DATA_EVENT is an event. A corresponding message code, and a receive_data parameter as a return parameter are recorded. A receive_data parameter is an NFC forum tag required for NFC protocol processing or data from a device.

HCI_SIZE_OF_COMPLETED_DATA is an event message for informing, at an NFC device, an NFCH of a size of completely processed data to perform flow control. How frequently this event message is to be sent is not particularly determined. This message type is an event. A corresponding message code, and a data_size parameter as a return parameter are recorded. A data_size parameter expresses a size of data processing-completed by an NFC device.

HCI_MODE_SWITCH_INTERRUPT is an interrupt event for informing a host of an NFC tag or a device when the NFC tag or the device is found at a mode switch, and a message type of HCI_MODE_SWITCH_INTERRUPT is an event. A corresponding message code, and a devicejype as a return parameter are recorded. A devicejype is a parameter expressing an NFC device or a card when the NFC device or the card is found. For example, 0x00 expresses ISO14443-A card only, 0x01 expresses ISO14443-B card only, 0x02 expresses Felica card only, 0x03 expresses ISO14443-A and B, 0x04 expresses ISO14443-A and Felica, 0x05 expresses Felica and ISO14443-B, and 0x06 expresses ISO14443-A and B and Felica and is assigned a code value for RFU

HCI_SECURE_INSERTED expresses a secure element has been inserted, HCI_SECURE_EXTRACTED expresses a secure element has been extracted, HCI_SECURE_READ expresses reading a secure element, and HCI_SECURE_WRITTEN expresses recording a secure element.

Up to now, an NFC HCI according to an example has been descried. Kinds, formats, code values of an HCI system, and a process for transmitting a message described herein and illustrated in the drawings are mere examples for understanding of the present invention. Various modifications and changes of the kinds, formats, code values thereof, and the process for transmitting the message may be realized on the basis of the examples within the scope of the present claims. Also, terms used in the examples is intended for understanding purpose only, and the present invention is not limited thereto.

### Industrial Applicability

The present invention is applied to an HCI between an NFCH and an NFC chipset or an NFC device.

### LIST OF FURTHER EXAMPLES

Example [1] A communication method between a host and a device in a communication interface between the host and the device connected to the host, the method comprising: transmitting a command message from the host to the device; transmitting a response message from the device to the host in response to the command message; transmitting data between the host and the device; and transmitting an event message from the device to the host when needed.
Example [2] The method of example 1, wherein the command message and the response message are transmitted in a pair of a command and a response thereto.
Example [3] The method of example 1, wherein the event message is independent with respect to the command message and the response message.
Example [4] The method of example 1, wherein the message conforms to a process of transmitting/receiving the message to/from a device using a corresponding device driver on the basis of a corresponding device driver interface mounted in the host.
Example [5] The method of example 1, wherein the message is transmitted and received on the basis of a device driver interface mounted in a first host and a device driver interface mounted in a second host.
Example [6] The method of example 1, wherein data transmitted between the host and the device is segmented by the host depending on a size of a storage space of the device, the segmented data are transmitted using information expressing data segmentation to the device through a plurality of processes, and the transmitted and segmented data are reconstructed by the device.
Example [7] A communication method between a host and a device in a communication interface between the host and the device connected to the host, the method comprising: transmitting a command message from the host to the device, the command message including data expressing a kind of a message, data expressing contents of a message, and additional data; transmitting an event message or transmitting a response message from the device, the response message including data expressing a kind of a message, data expressing contents of a message, and additional data; and transmitting information expressing data and a message including the data between the host and the device in response to the command or response message when needed.
Example [8] The method of example 7, wherein the data expressing the kind of the message is expressed using a code value expressing whether a message type of the message is a command, a response, a data, or an event.
Example [9] The method of example 7, wherein the data expressing the contents of the message is expressed using a code value expressing what command a corresponding command is, what response a corresponding response is, or what contents of an event a corresponding event is.
Example [10] The method of example 7, wherein the command message comprises a command for reading device data or setting device data
Example [11] The method of example 7, wherein the command message comprises a command for controlling power of the device or device power for an air interface.
Example [12] The method of example 7, wherein the command message comprises a command for initializing the device, setting a device mode, or reading a device mode
Example [13] The method of example 7, wherein the response message comprises one of a response in response to a device data providing request from the host, and a response in response to a device control command from the host.
Example [14] The method of example 7, wherein the response message comprises an error response message.
Example [15] The method of example 7, wherein the command message and the response message comprise a response message regarding transmission of a data packet or a transmission result.
Example [16] The method of example 7, wherein the event comprises at least one of a bus driver state, data reception by an air interface module, occurrence of a buffer size, detection of a tag or other device, card emulation, a mode switch, installation or removal of a secure element, a read or write event of secure element data.
Example [17] A communication method between a near field communication host and a near field communication device in a communication interface between the host and the device connected to the host, the method comprising: transmitting a command message from the host to the device, the command message including one of recording data, reading data of the device, requesting the device to transmit predetermined data, and setting the device; transmitting a response message informing a performance result of a relevant command from the device to the host in response to the command message; and transmitting an event message from the device to the host when needed.
Example [18] The method of example 17, wherein the command and response message comprises at least one of a command for reading data of the device and a response thereof, a command for turning on/off the device and a response thereof, a command for changing the device into a sleep mode or waking up the device and a response thereof, a command for starting detection of the device or stopping detection of the device and a response thereof, a command for initializing the device and a response thereof, a device buffer flush command and a response thereof, a device buffer size return command and a response thereof, a command for transmitting from the host or receiving data from the device and a response thereof, a tag data read/write command and a response thereof, and a command for setting or reading card emulation data of a near field communication tag emulation storage device and a response thereof.
Example [19] The method of example 17, wherein the response message comprises data expressing a success or a failure with respect to performance of a command, and data expressing contents of the failure when the command has failed.
Example [20] The method of example 17, wherein the host is a processor of a mobile device.

## Claims

1. A method for near field communicating with a Near Field Communication NFC host (10), the method being performed by a NFC device (20) and comprising:
receiving a command message (30) comprising a value indicating a kind of the command message from the NFC host (10);
transmitting a response message (40) in response to the command message (30) to the NFC host (10);
transmitting an event message (50) to the NFC host (10);
segmenting data based on a size of a device buffer; and
transmitting the segmented data (60) and data size-related data to the NFC host (10),
wherein the event message (50) is independent with the command message (30) or the response message (40),
wherein the NFC host (10) and the NFC device (20) comprise a respective host controller interface HCI, and
wherein the command message (30), the response message (40) and the event message (50) are transmitted or received using the respective host controller interface HCI.

2. A method for near field communicating with a Near Field Communication NFC device (20), the method being performed by a NFC host (10) and comprising:
transmitting a command message (30) comprising a value indicating a kind of the command message to the NFC device (20);
receiving a response message (40) in response to the command message (30) from the NFC device (20);
receiving an event message (50) from the NFC device (20); and
transmitting data (60) to the NFC device (20), comprising segmenting the data based on a size of a device buffer and transmitting the segmented data and data size-related data to the NFC device (20);
wherein the event message (50) is independent with the command message (30) or the response message (40),
wherein the NFC host (10) and the NFC device (20) comprise a respective host controller interface HCI, and
wherein the command message (30), the response message (40) and the event message (50) are transmitted or received using the respective host controller interface HCI.

3. The method of claim 2, further comprising:
receiving data associated with an available buffer size of the NFC device.

4. A NFC (Near Field Communication) host for near field communicating with a NFC device (20), the NFC host (10) comprising:
an interface unit configured to transmit a message to the NFC device and/or receive message from the NFC device; and
a controller configured to:
transmit a command message (30) comprising a value indicating a kind of the command message to the NFC device (20);
receive a response message (40) in response to the command message (30) from the NFC device (20);
receive an event message (50) from the NFC device (20);
segmenting data (6); and
transmit the segmented data (60) and data size-related data to the NFC device (20),
wherein the data (60) comprises the first information associated with a data size,
wherein the event message (50) is independent with the command message (30) or the response message (40),
wherein the NFC host (10) and the NFC device (20) comprise a respective host controller interface HCI, and
wherein the command message (30), the response message (40) and the event message (50) are transmitted or received using the respective host controller interface HCI.

5. The NFC host of claim 4, wherein the controller is further configured to receive data associated with an available buffer size of the NFC device.

6. A Near Field Communication NFC device for near field communicating with a NFC host (10), the NFC device (20) comprising:
an interface unit configured to transmit a message to the NFC host (10) and/or receive message from the NFC host (10); and
a controller configured to:
receive a command message (30) comprising a value indicating a kind of the command message from the NFC host (10);
transmit a response message (40) in response to the command message (30) to the NFC host (10);
transmit an event message (30) to the NFC host (10);
segment data based on a size of a device buffer; and
transmit the segmented data (60) and data size-related data to the NFC host (10),
wherein the event message (50) is independent with the command message (30) or the response message (40),
wherein the NFC host (10) and the NFC device (20) comprise a respective host controller interface HCI, and
wherein the command message (30), the response message (40) and the event message (50) are transmitted or received using the respective host controller interface HCI.

## Patentansprüche

1. Verfahren für eine Nahfeldkommunikation mit einem Nahfeldkommunikations-Host, NFC-Host, (10), wobei das Verfahren durch eine NFC-Vorrichtung (20) ausgeführt wird und umfasst:
Empfangen einer Befehlsnachricht (30), die einen Wert enthält, der eine Art der Befehlsnachricht angibt, von dem NFC-Host (10);
Senden einer Antwortnachricht (40) als Antwort auf die Befehlsnachricht (30) an den NFC-Host (10);
Senden einer Ereignisnachricht (50) an den NFC-Host (10);
Segmentieren von Daten anhand einer Größe eines Vorrichtungszwischenspeichers; und
Senden der segmentierten Daten (60) und von datengrößenbezogenen Daten an den NFC-Host (10),
wobei die Ereignisnachricht (50) von der Befehlsnachricht (30) oder der Antwortnachricht (40) unabhängig ist,
wobei der NFC-Host (10) und die NFC-Vorrichtung (20) eine jeweilige Host-Steuereinheitsschnittstelle, HCI, umfassen, und
wobei die Befehlsnachricht (30), die Antwortnachricht (40) und die Ereignisnachricht (50) unter Verwendung der jeweiligen Host-Steuereinheitsschnittstelle, HCI, gesendet oder empfangen werden.

2. Verfahren für eine Nahfeldkommunikation mit einer Nahfeldkommunikationsvorrichtung, NFC-Vorrichtung, (20), wobei das Verfahren durch einen NFC-Host (10) ausgeführt wird und umfasst:
Senden einer Befehlsnachricht (30), die einen Wert umfasst, der eine Art der Befehlsnachricht angibt, an die NFC-Vorrichtung (20);
Empfangen einer Antwortnachricht (40) als Antwort auf die Befehlsnachricht (30) von der NFC-Vorrichtung (20);
Empfangen einer Ereignisnachricht (50) von der NFC-Vorrichtung (20); und
Senden von Daten (60) an die NFC-Vorrichtung (20), das umfasst, die Daten anhand einer Größe eines Vorrichtungszwischenspeichers zu segmentieren und die segmentierten Daten und datengrößenbezogenen Daten an die NFC-Vorrichtung (20) zu senden;
wobei die Ereignisnachricht (50) von der Befehlsnachricht (30) oder der Antwortnachricht (40) unabhängig ist,
wobei der NFC-Host (10) und die NFC-Vorrichtung (20) eine jeweilige Host-Steuereinheitsschnittstelle, HCI, umfassen und
wobei die Befehlsnachricht (30), die Antwortnachricht (40) und die Ereignisnachricht (50) unter Verwendung der jeweiligen Host-Steuereinheitsschnittstelle HCI, gesendet oder empfangen werden.

3. Verfahren nach Anspruch 2, das ferner umfasst:
Empfangen von Daten, die einer verfügbaren Zwischenspeichergröße der NFC-Vorrichtung zugeordnet sind.

4. NFC-Host (Nachfeldkommunikations-Host) für eine Nahfeldkommunikation mit einer NFC-Vorrichtung (20), wobei der NFC-Host (10) umfasst:
eine Schnittstelleneinheit, die konfiguriert ist, eine Nachricht an die NFC-Vorrichtung zu senden und/oder eine Nachricht von der NFC-Vorrichtung zu empfangen; und
eine Steuereinheit, die konfiguriert ist zum:
Senden einer Befehlsnachricht (30), die einen Wert umfasst, der eine Art der Befehlsnachricht angibt, an die NFC-Vorrichtung (20);
Empfangen einer Antwortnachricht (40) als Antwort auf die Befehlsnachricht (30) von der NFC-Vorrichtung (20);
Empfangen einer Ereignisnachricht (50) von der NFC-Vorrichtung (20);
Segmentieren von Daten (6); und
Senden der segmentierten Daten (60) und von datengrößenbezogenen Daten an die NFC-Vorrichtung (20),
wobei die Daten (60) die ersten Informationen umfassen, die einer Datengröße zugeordnet sind,
wobei die Ereignisnachricht (50) von der Befehlsnachricht (30) oder der Antwortnachricht (40) unabhängig ist,
wobei der NFC-Host (10) und die NFC-Vorrichtung (20) eine jeweilige Host-Steuereinheitsschnittstelle, HCI, umfassen, und
wobei die Befehlsnachricht (30), die Antwortnachricht (40) und die Ereignisnachricht (50) unter Verwendung der jeweiligen Host-Steuereinheitsschnittstelle, HCI, gesendet oder empfangen werden.

5. NFC-Host nach Anspruch 4, wobei die Steuereinheit ferner konfiguriert ist, Daten zu empfangen, die einer verfügbaren Zwischenspeichergröße der NFC-Vorrichtung zugeordnet sind.

6. Nahfeldkommunikationsvorrichtung, NFC-Vorrichtung, für eine Nahfeldkommunikation mit einem NFC-Host (10), wobei die NFC-Vorrichtung (20) umfasst:
eine Schnittstelleneinheit, die konfiguriert ist, eine Nachricht an den NFC-Host (10) zu senden und/oder eine Nachricht von dem NFC-Host (10) zu empfangen; und
eine Steuereinheit, die konfiguriert ist zum:
Empfangen einer Befehlsnachricht (30), die einen Wert umfasst, der eine Art der Befehlsnachricht angibt, von dem NFC-Host (10);
Senden einer Antwortnachricht (40) als Antwort auf die Befehlsnachricht (30) an den NFC-Host (10);
Senden einer Ereignisnachricht (30) an den NFC-Host (10);
Segmentieren von Daten anhand einer Größe eines Vorrichtungszwischenspeichers; und
Senden der segmentierten Daten (60) und von datengrößenbezogenen Daten an den NFC-Host (10),
wobei die Ereignisnachricht (50) von der Befehlsnachricht (30) oder der Antwortnachricht (40) unabhängig ist,
wobei der NFC-Host (10) und die NFC-Vorrichtung (20) eine jeweilige Host-Steuereinheitsschnittstelle, HCI, umfassen und
wobei die Befehlsnachricht (30), die Antwortnachricht (40) und die Ereignisnachricht (50) unter Verwendung der jeweiligen Host-Steuereinheitsschnittstelle, HCI, gesendet oder empfangen werden.

## Revendications

1. Procédé de communication en champ proche avec un hôte de communication en champ proche, NFC, (10), le procédé étant effectué par un dispositif NFC (20) et comprenant :
la réception d'un message de commande (30) comprenant une valeur indiquant un type du message de commande en provenance de l'hôte NFC (10) ;
la transmission d'un message de réponse (40) en réponse au message de commande (30) à destination de l'hôte NFC (10) ;
la transmission d'un message d'événement (50) à destination de l'hôte NFC (10) ;
la segmentation de données sur la base d'une taille d'une mémoire tampon de dispositif ; et
la transmission des données segmentées (60) et de données liées à une taille de données à destination de l'hôte NFC (10),
dans lequel le message d'événement (50) est indépendant du message de commande (30) ou du message de réponse (40),
dans lequel l'hôte NFC (10) et le dispositif NFC (20) comprennent une interface d'organe de commande d'hôte, HCI, respective, et
dans lequel le message de commande (30), le message de réponse (40) et le message d'événement (50) sont transmis ou reçus en utilisant l'interface d'organe de commande d'hôte, HCI, respective.

2. Procédé de communication en champ proche avec un dispositif de communication en champ proche, NFC, (20), le procédé étant effectué par un hôte NFC (10) et comprenant :
la transmission d'un message de commande (30) comprenant une valeur indiquant un type du message de commande à destination du dispositif NFC (20) ;
la réception d'un message de réponse (40) en réponse au message de commande (30) en provenance du dispositif NFC (20) ;
la réception d'un message d'événement (50) en provenance du dispositif NFC (20) ; et
la transmission de données (60) à destination du dispositif NFC (20), comprenant la segmentation des données sur la base d'une taille d'une mémoire tampon de dispositif et la transmission des données segmentées et de données liées à une taille de données à destination du dispositif NFC (20),
dans lequel le message d'événement (50) est indépendant du message de commande (30) ou du message de réponse (40),
dans lequel l'hôte NFC (10) et le dispositif NFC (20) comprennent une interface d'organe de commande d'hôte, HCI, respective, et
dans lequel le message de commande (30), le message de réponse (40) et le message d'événement (50) sont transmis ou reçus en utilisant l'interface d'organe de commande d'hôte, HCI, respective.

3. Procédé selon la revendication 2, comprenant en outre :
la réception de données associées à une taille de mémoire tampon disponible du dispositif NFC.

4. Hôte de communication en champ proche, NFC, pour une communication en champ proche avec un dispositif NFC (20), l'hôte NFC (10) comprenant :
une unité d'interface configurée pour effectuer la transmission d'un message à destination du dispositif NFC et/ou la réception d'un message en provenance du dispositif NFC ; et
un organe de commande configuré pour effectuer :
la transmission d'un message de commande (30) comprenant une valeur indiquant un type du message de commande à destination du dispositif NFC (20) ;
la réception d'un message de réponse (40) en réponse au message de commande (30) en provenance du dispositif NFC (20) ;
la réception d'un message d'événement (50) en provenance du dispositif NFC (20) ;
la segmentation de données (6) ; et
la transmission des données segmentées (60) et de données liées à une taille de données à destination du dispositif NFC (20),
dans lequel les données (60) comprennent les premières informations associées à une taille de données,
dans lequel le message d'événement (50) est indépendant du message de commande (30) ou du message de réponse (40),
dans lequel l'hôte NFC (10) et le dispositif NFC (20) comprennent une interface d'organe de commande d'hôte, HCI, respective, et
dans lequel le message de commande (30), le message de réponse (40) et le message d'événement (50) sont transmis ou reçus en utilisant l'interface d'organe de commande d'hôte, HCI, respective.

5. Hôte NFC selon la revendication 4, dans lequel l'organe de commande est en outre configuré pour effectuer la réception de données associées à une taille de mémoire tampon disponible du dispositif NFC.

6. Dispositif de communication en champ proche, NFC, pour une communication en champ proche avec un hôte NFC (10), le dispositif NFC (20) comprenant :
une unité d'interface configurée pour effectuer la transmission d'un message à destination de l'hôte NFC (10) et/ou la réception d'un message en provenance de l'hôte NFC (10) ; et
un organe de commande configuré pour effectuer :
la réception d'un message de commande (30) comprenant une valeur indiquant un type du message de commande en provenance de l'hôte NFC (10) ;
la transmission d'un message de réponse (40) en réponse au message de commande (30) à destination de l'hôte NFC (10) ;
la transmission d'un message d'événement (30) à destination de l'hôte NFC (10) ;
la segmentation de données sur la base d'une taille d'une mémoire tampon de dispositif ; et
la transmission des données segmentées (60) et de données liées à une taille de données à destination de l'hôte NFC (10),
dans lequel le message d'événement (50) est indépendant du message de commande (30) ou du message de réponse (40),
dans lequel l'hôte NFC (10) et le dispositif NFC (20) comprennent une interface d'organe de commande d'hôte, HCI, respective, et
dans lequel le message de commande (30), le message de réponse (40) et le message d'événement (50) sont transmis ou reçus en utilisant l'interface d'organe de commande d'hôte, HCI, respective.
